# EUROPÄISCHE PATENTANMELDUNG

(11) **EP 0 549 907 A1**
(43) Veröffentlichungstag der Anmeldung: **07.07.1993**
(21) Anmeldenummer: 92120526.6
(22) Anmeldetag: 02.12.1992
(51) Int. Cl.: H04N 3/15

(54) **Optische Detektoranordnung**

(30) Priorität: 21.12.1991 DE 4142675
(71) Anmelder: Firma Carl Zeiss, D-73446 Oberkochen (DE); CARL-ZEISS-STIFTUNG, HANDELND ALS CARL ZEISS, D-73446 Oberkochen (DE)
(72) Erfinder: Claus, Michael, Dr., W-7080 Aalen (DE); Nolting, Jürgen, Dr., W-7080 Aalen (DE); Duchâteau, Rüdiger, Dr., W-7082 Oberkochen (DE); Raasch, Michael, W-7080 Aalen (DE)

(57) **Zusammenfassung**

Die Aneinanderreihung einzelner, benachbarter optischer Detektoreinheiten (1,2) erfolgt durch die versetzte Anordnung benachbarter Detektoreinheiten in Kombination mit einem Umlenkelement (3). Im Überlappbereich gelangt ein Teil der einfallenden Strahlung direkt auf eine erste Detektoreinheit, während ein weiterer Teil mit Hilfe eines Umlenkelementes auf eine zweite Detektoreinheit abgebildet wird. Die Summation der registrierten Einzelintensitäten im Überlappbereich liefert die einfallende Gesamtintensität. Als Umlenkelement eignet sich insbesondere ein Spiegel. Eine mögliche Verwendung findet die Detektoranordnung in elektrooptischen Luftbildkameras.

## Beschreibung

Die Erfindung betrifft eine optische Detektoranordnung gemäß dem Oberbegriff des Anspruches 1.

Falls bei der Abtastung oder Erfassung großer Sehfelder zur Realisierung einer hohen Auflösung mehrere optische Detektoren erforderlich sind, so müssen diese optischen Detektoren derart in der Bildebene angeordnet werden, daß über ein größeres Bildformat eine gleichmäßige, möglichst hohe Empfindlichkeit erreicht wird. Insbesondere an den Stellen, wo die einzelnen optischen Detektoren aneinandergefügt werden, sollte hierbei ein lückenloser Anschluß gewährleistet sein, d.h. möglichst wenig Bildinformationen verloren gehen.

Verwendet man als optische Detektoren beispielsweise CCD-Arrays, so ist bekannt, diese CCD-Arrays versetzt in der Bildebene anzuordnen. Dies wird beispielsweise im 'DATA BOOK' der Firma TOSHIBA anhand des TCD 116 DC-Zeilensensors beschrieben. Hiermit wird zwar erreicht, daß an den Randbereichen der aneinandergrenzenden einzelnen CCD-Arrays keine Bildinformation verlorengeht, jedoch resultiert eine perspektivische Verzerrung. Diese Verzerrung muß durch entsprechende Datenverarbeitungsverfahren anschließend wieder korrigiert werden. Eine weitere Lösung der oben angesprochenen Problematik ist aus dem Artikel "Elektro-Optical Imaging for Film Cameras" von C.C. Schleifer (in: PROCEEDINGS of SPIE, Vol. 496, Airborne Reconnaissance VIII, 1984, pp. 56-60) bekannt. Dort werden mehrere elektrooptische Sensoren über ein "Optical Butting" bezeichnetes Verfahren aneinandergereiht. Dabei sind in zwei zueinander senkrechten Ebenen jeweils in Längsrichtung mehrere CCD-Arrays nacheinander angeordnet. Die Sensoren der beiden Ebenen sind hierbei versetzt gegeneinander angeordnet. Zwischen den beiden Ebenen mit den einzelnen CCD-Arrays ist ein längliches Prisma vorgesehen, das neben einer alternierend-verspiegelten Strahlaufteilungsfläche eine vollverspiegelte Reflexionsfläche besitzt. Das über die Abbildungsoptik auf dieses Prisma einfallende Licht wird jeweils alternierend auf die beiden einzelnen Detektorreihen abgebildet. Es resultiert im jeweiligen Überlappbereich zwischen benachbarten Detektoren kein Informationsausfall. Eine derartige Anordnung weist jedoch für bestimmte Anwendungszwecke gravierende Nachteile auf. So ergibt sich das Problem der mangelnden mechanischen Stabilität eines derartigen länglichen dünnen Glasprismas, falls eine derartige Anordnung in einer Luftbildkamera in einem Flugkörper eingesetzt werden soll. Weiterhin sind Absorptionsverluste aufgrund des resultierenden Glasweges im Prisma die Folge, was wiederum Intensitätseinbußen bewirkt. Des weiteren kann eine derartige Anordnung aufgrund des jeweils nur für eine bestimmte Wellenlänge korrigierten Prismas nur in einem schmalen Spektralbereich eingesetzt werden. Zudem muß die Abbildungsoptik auf das Prisma abgestimmt werden.

Aufgabe der vorliegenden Erfindung ist es daher, eine optische Detektoranordnung aus mehreren einzelnen Detektoreinheiten zu schaffen, bei der an den Übergangsstellen zwischen den einzelnen Detektoreinheiten keine Informationsverluste resultieren. Weiterhin soll eine gewisse mechanische Stabilität einer derartigen Anordnung gewährleistet und der Einsatz in einem größeren Wellenlängenbereich möglich sein.

Die Aufgabe wird gelöst durch eine optische Detektoranordnung mit den Merkmalen des Anspruches 1. Vorteilhafte Weiterführungen des Erfindungsgedankens sind Gegenstand der folgenden Unteransprüche.

Wesentlich für die erfindungsgemäße Anordnung ist, daß eine erste Detektoreinheit direkt von der einfallenden Strahlung beaufschlagt wird, während auf die benachbarte Detektoreinheit die einfallende Strahlung mit Hilfe eines Umlenkelementes umgelenkt wird. Die jeweils benachbarten Detektoreinheiten sowie das Umlenkelement sind so zueinander angeordnet, daß in einem definierten Überlappbereich ein Teil der einfallenden Strahlung direkt auf den Randbereich einer ersten Detektoreinheit fällt und ein weiterer Teil über das jeweilige Umlenkelement auf den Randbereich einer zweiten Detektoreinheit umgelenkt wird. Bei aufeinander abgestimmter Justierung der aneinander anschließenden Detektoreinheiten entspricht im Überlappbereich, der durch die beiden Randbereiche definiert ist, die Summe der registrierten Einzelintensitäten der gesamten einfallenden Strahlungsintensität. In einer vorteilhaften Ausführungsform wird als Umlenkelement ein Spiegel verwendet. Damit entfallen Probleme, wie etwa zu korrigierende Farbfehler oder aber zu berücksichtigende Glaswege. Somit ist keine Modifikation bzw. Abstimmung der Abbildungsoptik auf das jeweils verwendete Prismenmaterial sowie die damit verbundenen spektralen Fehler nötig. Mit Hilfe der erfindungsgemäßen optischen Detektoranordnung resultiert demzufolge ein breiterer spektraler Einsatzbereich. Des weiteren entfallen Absorptions- und Reflexionsverluste durch den nötigen Glasweg bzw. Mehrfachreflexionen im Prisma. Auch die mechanische Stabilität ist höher als bei der Verwendung eines länglichen Prismas.

Als optische Detektoreinheiten eignen sich im besonderen elektrooptische Detektoren wie CCD-Zeilen oder CCD-Arrays. Jedoch ist auch die Verwendung eines Filmes möglich.

Weitere Vorteile der erfindungsgemäßen optischen Detektoranordnung ergeben sich im folgenden anhand der Beschreibung der beigefügten Zeichnungen.

Dabei zeigt
- Fig. 1: ein Ausführungsbeispiel der erfindungsgemäßen optischen Detektoranordnung in perspektivischer Darstellung;
- Fig. 2: eine graphische Darstellung der registrierten Intensitäten im Überlappbereich zweier benachbarter Detektoreinheiten;
- Fig. 3: eine mögliche Dimensionierung des Überlappbereiches in schematischer Darstellung.

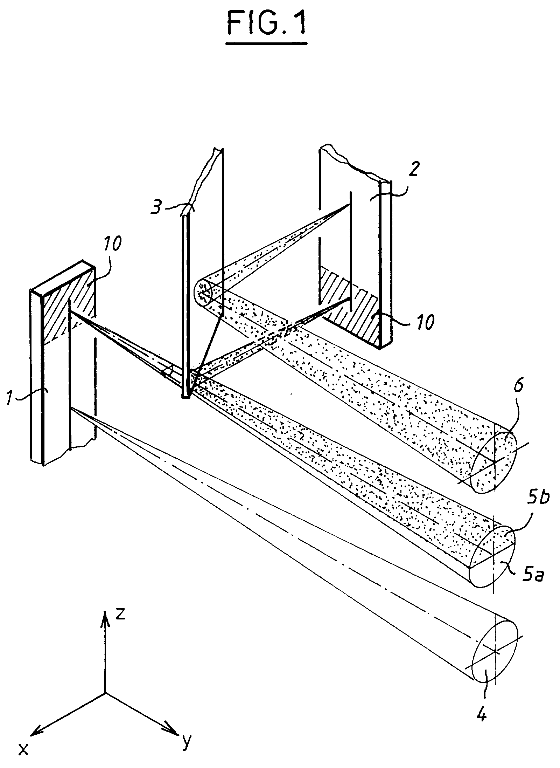

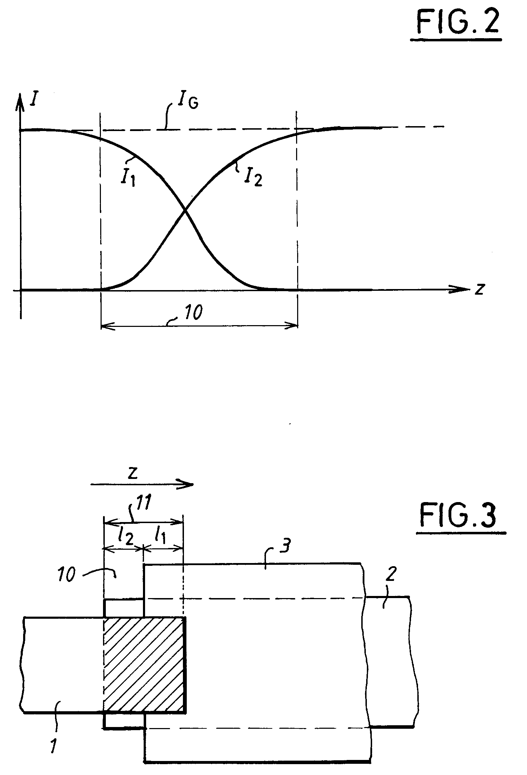

In Fig. 1 ist ein Ausführungsbeispiel der erfindungsgemäßen optischen Detektoranordnung perspektivisch dargestellt. Veranschaulicht soll dabei werden, wie zwei benachbarte optische Detektoreinheiten (1,2) erfindungsgemäß angeordnet werden. Selbstverständlich ist auch bei Verwendung von mehr als zwei erforderlichen Detektoreinheiten die Anordnung aneinander anschließender Detektoreinheiten in erfindungsgemäßer Weise möglich. Die im folgenden, aus Gründen der besseren Verständlichkeit verwendeten Koordinatenbezeichnungen, orientieren sich dabei an den Raumrichtungen, die durch das X-Y-Z-Koordinatensystem in der Zeichnung vorgegeben werden. Eine erste optische Detektoreinheit (1) ist hierbei in der X-Z-Ebene angeordnet, eine zweite optische Detektoreinheit (2) in der Y-Z-Ebene. Geeignete optische Detektoreinheiten sind beispielsweise elektrooptische CCD-Zeilensensoren oder aber elektrooptische CCD-Flächenarrays. Diese registrieren über eine nicht dargestellte Abbildungsoptik die einfallende elektromagnetische Strahlung. Die elektrooptischen Detektoreinheiten werden dabei je nach spektralem Einsatzbereich der Gesamtanordnung gewählt. Die einfallende elektromagnetische Strahlung wird durch die einfallenden Lichtkegel (4,5a,5b,6) dargestellt. Da ein großes Sehfeld bei hoher Auflösung abgebildet werden soll, sind mehrere einzelne optische Detektoreinheiten (1,2) erforderlich, von denen hier lediglich zwei dargestellt werden. Die erste optische Detektoreinheit (1) ist hierbei in einer anderen Bildebene angeordnet als die zweite Detektoreinheit (2). Die beiden Bildebenen stehen im dargestellten Ausführungsbeispiel senkrecht aufeinander, was jedoch nicht erfindungswesentlich ist. In Z-Richtung sind die beiden Detektoreinheiten (1,2) versetzt zueinander angeordnet. Zwischen den beiden Detektoreinheiten (1,2) befindet sich in definierter Winkelstellung als Umlenkelement ein Spiegel (3). Der verwendete Spiegel ist vorzugsweise so angeordnet, daß die einfallende Strahlung senkrecht auf die zweite Detektoreinheit (2) trifft. Die erste Detektoreinheit (1) wird somit unmittelbar von der einfallenden Strahlung, veranschaulicht durch den Lichtkegel (4), beaufschlagt und die einfallende Intensität über eine geeignete Auswerteeinheit registriert. Dagegen wird die auf die zweite Detektoreinheit (2) auftreffende Strahlung, veranschaulicht durch den Lichtkegel (6), über den Spiegel (3) umgelenkt und gelangt erst nach dieser Umlenkung auf die eigentliche optische Detektoreinheit (2), wo die einfallende Intensität ebenfalls mittels einer geeigneten Auswerteeinheit, die hier nicht dargestellt ist, registriert wird. Wesentlich dafür, daß keine Bildinformationen im Anschlußbereich zwischen den beiden aneinander anschließenden optischen Detektoreinheiten (1,2) verlorengeht ist, daß sich die beiden optischen Detektoreinheiten (1,2) in einem definierten Bereich entlang der Z-Achse überlappen. Dieser Überlappbereich, definiert durch die Randbereiche der beiden optischen Detektoreinheiten, ist in Fig. 1 in beiden Detektoreinheiten (1,2) schraffiert dargestellt. Es wird also elektromagnetische Strahlung, die auf den Überlappbereich (10) fällt, sowohl direkt auf der ersten optischen Detektoreinheit (1) registriert als auch über den Spiegel (3) umgelenkt auf der zweiten optischen Detektoreinheit (2) registriert. Im Überlappbereich (10) wird demzufolge ein Teil der einfallenden elektromagnetischen Strahlung sowohl auf die erste optische Detektoreinheit (1) abgebildet, ein weiterer Teil hingegen auf die zweite optische Detektoreinheit (2). Die Intensitätsabnahme der registierten elektromagnetischen Strahlung verläuft in Z-Richtung, wie in Fig. 2 dargestellt. So registriert im Überlappbereich (10) die erste optische Detektoreinheit (1) bzw. die entsprechende Auswerteeinheit eine Intensitätsabnahme in Richtung der positiven Z-Achse, während die zweite optische Detektoreinheit (2) bzw. die Auswerteeinheit in diesem Bereich eine zunehmende Signal-Intensität registriert. Die registrierte Intensität der ersten optischen Detektoreinheit (1) wird hierbei mit I₁ bezeichnet, die der zweiten optischen Detektoreinheit mit I₂. Die aufsummierte Gesamtintensität im Überlappbereich (10) wird durch die gestrichtelte Linie I_{G} veranschaulicht. Sind die beiden optischen Detektoreinheiten (1,2) in Z-Richtung pixelgenau zueinander justiert, so ergibt die Addition der registrierten Einzelintensitäten im Überlappbereich (10) die einfallende Gesamtintensität. Dies wird in Fig. 2 durch die gestrichelte Linie dargestellt. Eine derartige Summation der registrierten Signal-Intensitäten kann über bekannte Datenverarbeitungsverfahren mit Hilfe einer Auswerteeinheit z.B. elektronisch erfolgen.

Bei der Relativ-Anordnung der beiden Detektoreinheiten (1,2) ist insbesondere zu beachten, daß in Z-Richtung die erste optische Detektoreinheit (1) ebenso wie die zweite optische Detektoreinheit (2) gleichzeitig einen definierten Überlappbereich (10) erfaßt.

Anhand von Fig. 3 werden die Zusammenhänge im Bereich des Überlappbereichs (10) noch einmal detailliert erläutert. Dargestellt wird dabei, wie die erste optische Detektoreinheit (1) um eine definierte Länge l₁ in den Bereich des Spiegels (3) hineinragt. Die zweite optische Detektoreinheit (2) hingegen ragt um die Länge l₂ über den Spiegel (3) hinaus. Die so definierten Flächen ergeben in Addition den Überlappbereich (10), dessen Breite in Z-Richtung mit Hilfe des Pfeiles (11) dargestellt wird. Die Breite des Überlappbereiches (10) muß hierzu identisch sein zur Breite des durch den Spiegel (3) erzeugten Halbschattens in der jeweiligen Bildebene der beiden optischen Detektoreinheiten (1,2).

Die vorab beschriebene Anordnung kann entsprechend für Filme verwendet werden. In diesem Fall muß anstelle der elektronischen Summation der Ausgangssignale der beiden elektrooptischen Detektoreinheiten eine entsprechende Überlagerung der beiden getrennten Filme im Überlappbereich vorgenommen werden.

Eine mögliche Verwendung findet die erfindungsgemäße optische Detektoranordnung z.B. in elektrooptischen Luftbildkameras, wo große Bildfelder bei gleichzeitiger hoher Auflösung erfaßt werden sollen.

## Patentansprüche

1. Optische Detektoranordnung, bestehend aus mindestens zwei strahlungsempfindlichen Detektoreinheiten, sowie mindestens einem Umlenkelement, dadurch gekennzeichnet, daß das Umlenkelement (3), sowie jeweils benachbarte, aneinander anschließende Detektoreinheiten (1,2) derart relativ zueinander angeordnet sind, daß das Umlenkelement (3) einen Teil der auf den Randbereich einer ersten Detektoreinheit (1) einfallenden Strahlung auch auf den Randbereich der benachbarten Detektoreinheit (2) umlenkt, so daß in einem durch die beiden Randbereiche definierten Überlappbereich (10) die Summation der einzelnen Signalamplituden die einfallende Gesamtintensität ergibt.

2. Optische Detektoranordnung nach Anspruch 1, dadurch gekennzeichnet, daß die einfallende Strahlung die erste Detektoreinheit (1) unmittelbar beaufschlagt und die zweite Detektoreinheit (2) über das Umlenkelement (3) beaufschlagt.

3. Optische Detektoranordnung nach Anspruch 1 und 2, dadurch gekennzeichnet, daß als Umlenkelement (3) ein Spiegel vorgesehen ist.

4. Optische Detektoranordnung nach mindestens einem der Ansprüche 1-3, dadurch gekennzeichnet, daß als Detektoreinheiten (1,2) elektrooptische Detektoren vorgesehen sind.

5. Optische Detektoranordnung nach Anspruch 4, dadurch gekennzeichnet, daß als elektrooptische Detektoren CCD-Zeilensensoren oder/und CCD-Flächenarrays vorgesehen sind.

6. Optische Detektoranordnung nach Anspruch 1-3, dadurch gekennzeichnet, daß als Detektoreinheiten Filme vorgesehen sind.

7. Optische Detektoranordnung nach Anspruch 5, dadurch gekennzeichnet, daß eine Auswerteeinheit vorgesehen ist, die die Signalamplituden registriert und über die Signalamplituden im Überlappbereich (10) benachbarter Detektoreinheiten (1,2) summiert.

8. Optische Detektoranordnung nach Anspruch 4, dadurch gekennzeichnet, daß die benachbarten Detektoreinheiten (1,2) pixelgenau zueinander justiert sind.

9. Optische Detektoranordnung nach mindestens einem der Ansprüche 1-8, dadurch gekennzeichnet, daß die benachbarten Detektoreinheiten in unterschiedlichen Ebenen angeordnet sind.
